# EUROPEAN PATENT APPLICATION

(11) **EP 4 322 652 A1**
(43) Date of publication of application: **14.02.2024**
(21) Application number: 21935985.8
(22) Date of filing: 06.04.2021
(51) Int. Cl.: H04W 72/04, H04W 92/20

(54) **RADIO COMMUNICATION NODE AND RADIO COMMUNICATION METHOD**

(71) Applicant: NTT DOCOMO, INC., Chiyoda-ku Tokyo 100-6150 (JP)
(72) Inventor: KURITA, Daisuke, Tokyo 100-6150 (JP); HARADA, Hiroki, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2021/014682
(87) International publication number: WO 2022/215181

(57) **Abstract**

A radio communication node (100B) receives resource information indicating the type of resources allocated to the radio link with the lower node from the network, and configures the radio link based on the resource information. The radio communication node (100B) receives the resource information indicating the type of the time resource in the time direction and the type of the frequency resource in the frequency direction for at least a part of the time resource, or the resource information indicating the type of the resource for each combination of the position in the time direction and the position in the frequency direction for at least a part of the time resource.

## Description

### [Technical Field]

The present disclosure relates to a radio communication node for configuring radio access and radio backhaul.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

For example, in the radio access network (R_AN) of the NR, an integrated access and backhaul (IAB) is defined which integrates radio access to a terminal (User Equipment, UE) and radio backhaul between radio communication nodes such as a radio base station (gNB) (see Non-Patent Literature 1).

In IAB, an IAB node has a Mobile Termination(MT) function for connecting to a parent node (which may be called an IAB donor) and a Distributed Unit(DU) function for connecting to a child node or UE.

Release 17 of 3GPP will support simultaneous transmission and reception using Frequency Division Multiplexing (FDM) for a radio link (Link_parent) between a parent node and an IAB node, that is, a MT, and a radio link (Link_child) between an IAB node and a child node, that is, a DU.

### [Citation List]

### [Non-Patent Literature]

[Non-Patent Literature 1]
3GPP TS 38.213 V 16.1.0, 3rd Generation Partnership Project; Technical Specification Group Radio Access Network; NR; Physical layer procedures for control (Release 16), 3GPP, March 2020

### [Summary of Invention]

In order to realize simultaneous transmission and reception in MT and DU using FDM, it is conceivable to specify that resource information indicating the type of resource (Hard/Soft/NA(Not Available), etc.) in the time direction and frequency direction be transmitted from the network to the IAB node, etc. However, when TDM (Time Division Multiplexing) and FDM coexist, it is necessary to clear the problems of backward compatibility, etc., such as coping with the case where it is not supported by the previous specification.

Therefore, the following disclosure is made in view of such a situation, and the purpose of the disclosure is to provide a radio communication node capable of executing appropriate simultaneous transmission and reception using FDM even when MT and DU coexist with TDM.

One aspect of the present disclosure is a radio communication node (radio communication node 100B) including a reception unit (radio reception unit 162) that receives resource information from a network indicating a type of resource to be allocated to a radio link with a lower node, and a control unit (control unit 190) that configures the radio link based on the resource information. The reception unit receives the resource information indicating a type of a time resource in a time direction and a type of a frequency resource in a frequency direction for at least a part of a time resource, or the resource information indicating a type of resource for each combination of a position in the time direction and a position in the frequency direction for at least a part of a time resource.

One aspect of the present disclosure is a radio communication node (radio communication node 100B) including a reception unit (radio reception unit 162) that receives resource information from a network indicating a type of resource to be allocated to a radio link with a lower node, and a control unit (control unit 190) that configures the radio link based on the resource information. The reception unit receives the resource information indicating a type of a time resource in a time direction and a type of a frequency resource in a frequency direction for at least a part of a time resource, or the resource information indicating a type of resource for each combination of a position in the time direction and a position in the frequency direction for at least a part of a time resource.

### [Brief Description of Drawings]

[Fig. 1]

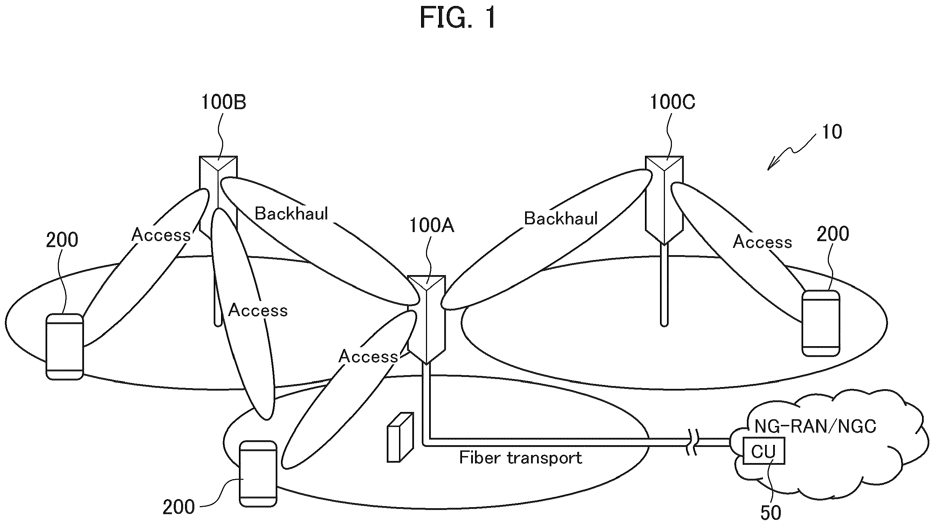

   Fig. 1 is a general schematic diagram of a radio communication system 10.
[Fig. 2]

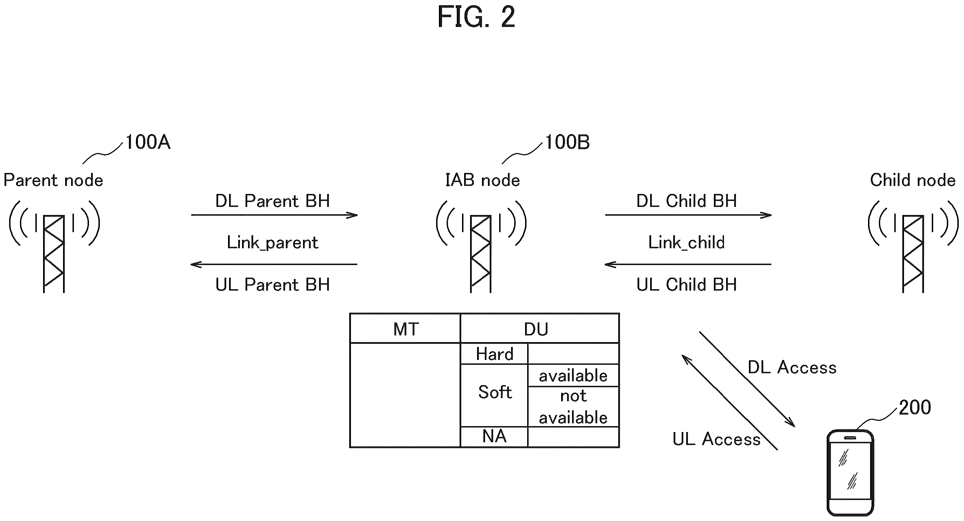

   Fig. 2 is a diagram showing a basic configuration example of IAB.
[Fig. 3]

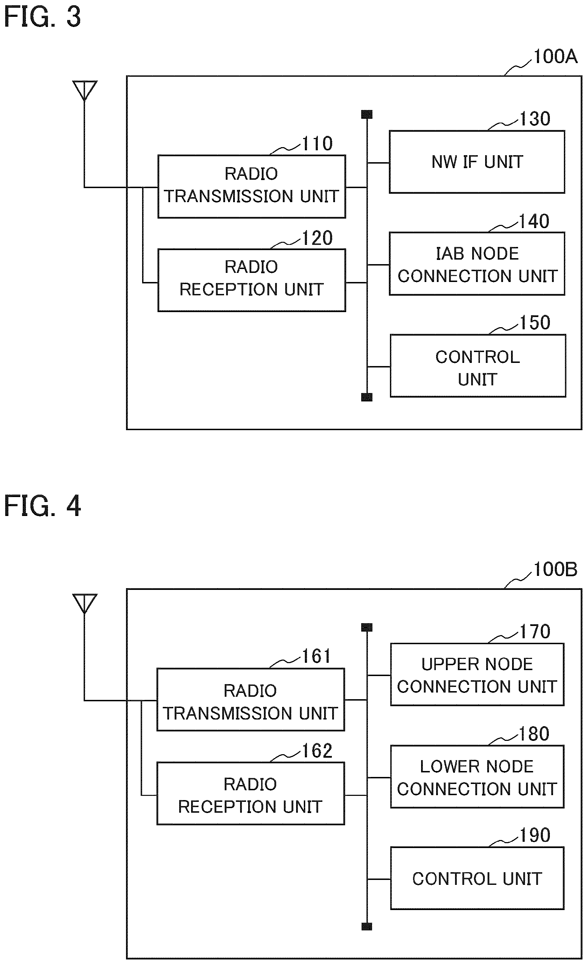

   Fig. 3 is a functional block configuration diagram of a radio communication node 100 A.
[Fig. 4]
   Fig. 4 is a functional block configuration diagram of a radio communication node 100B.
[Fig. 5A]

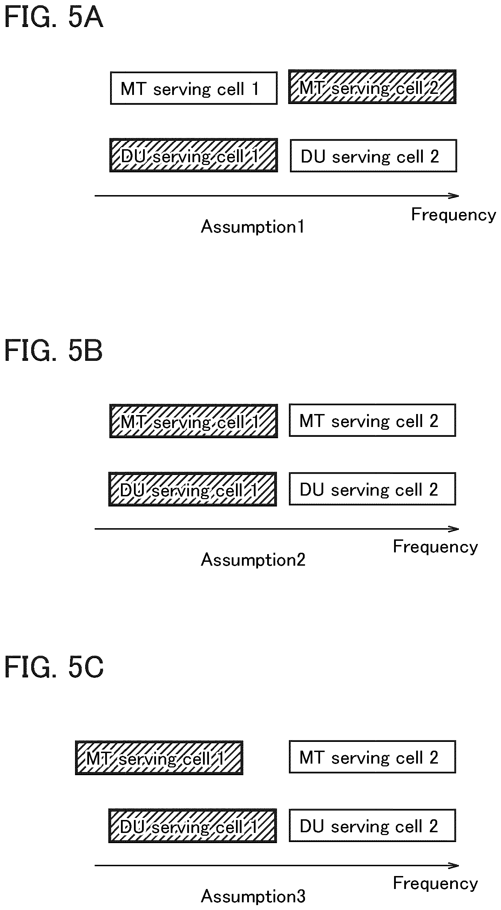

   Fig. 5A is a diagram showing an example of using the frequency resources of the DU serving cell and the MT serving cell according to the assumption 1.
[Fig. 5B]
   Fig. 5B is a diagram showing an example of using the frequency resources of the DU serving cell and the MT serving cell according to the assumption 2.
[Fig. 5C]
   Fig. 5C is a diagram showing an example of using the frequency resources of the DU serving cell and the MT serving cell according to the assumption 3.
[Fig. 6]

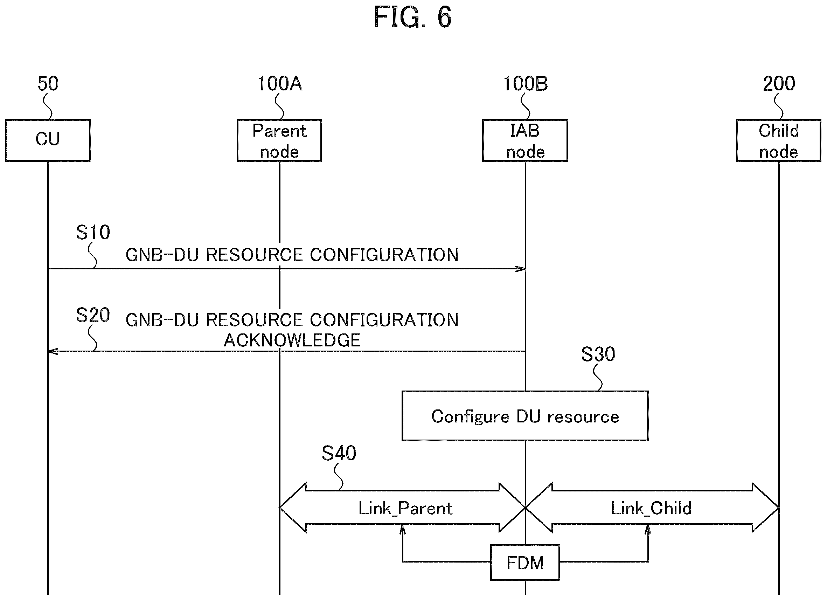

   Fig. 6 is a diagram showing a schematic communication sequence concerning the configuration of the DU resources of the IAB node.
[Fig. 7A]

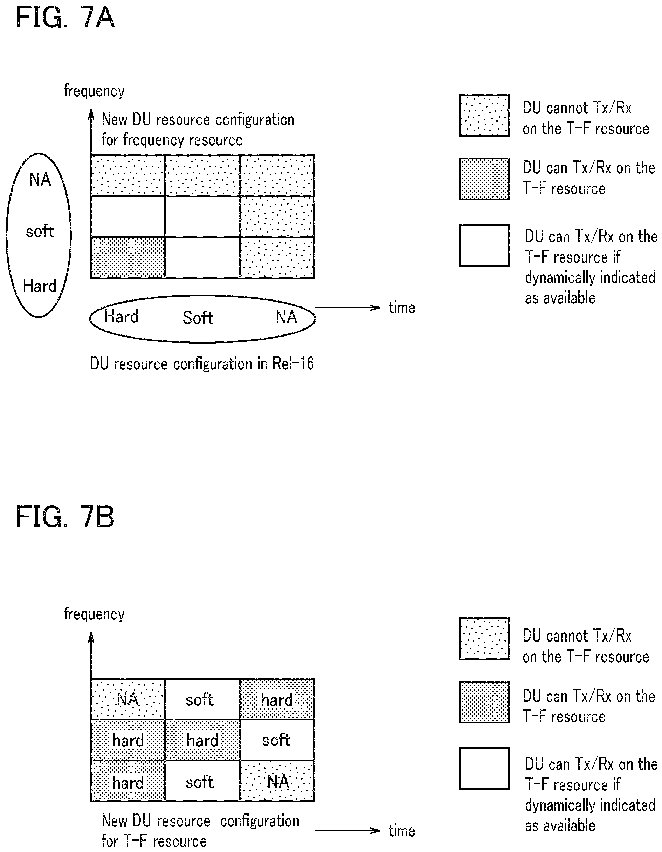

   Fig. 7A is a diagram showing an example of the configuration of the DU resources according to Option 1.
[Fig. 7B]
   Fig. 7B is a diagram showing an example of the configuration of the DU resources according to Option 2.
[Fig. 8]

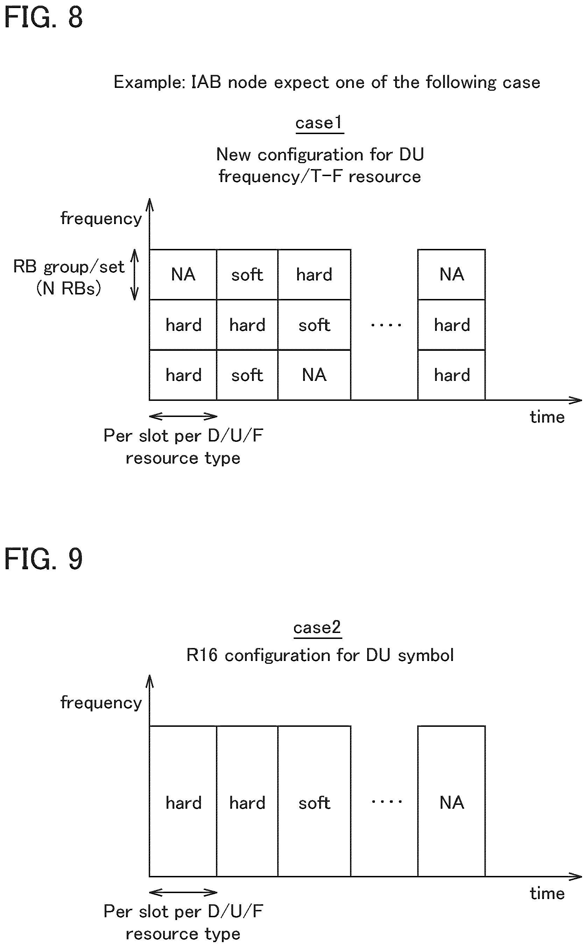

   Fig. 8 is a diagram showing an assumed case 1.
[Fig. 9]
   Fig. 9 is a diagram showing an assumed case 2.
[Fig. 10]

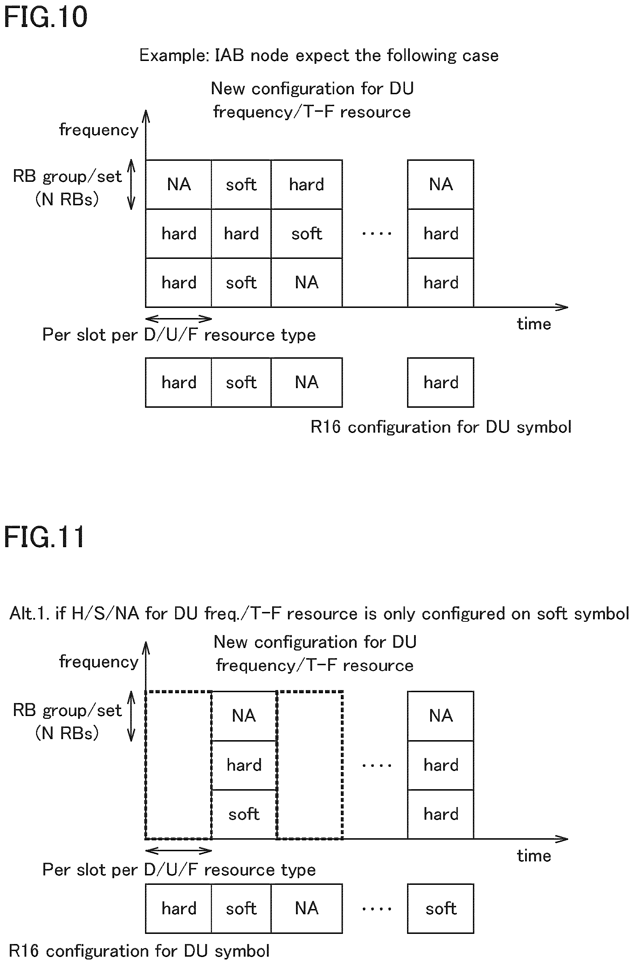

   Fig. 10 is a diagram showing a case 1 and a case 2.
[Fig. 11]
   Fig. 11 is a diagram 11 showing an example (Alt.1) in which the DU frequency/T-F resource type (H/S/NA) is configured only when the soft symbol is set.
[Fig. 12]

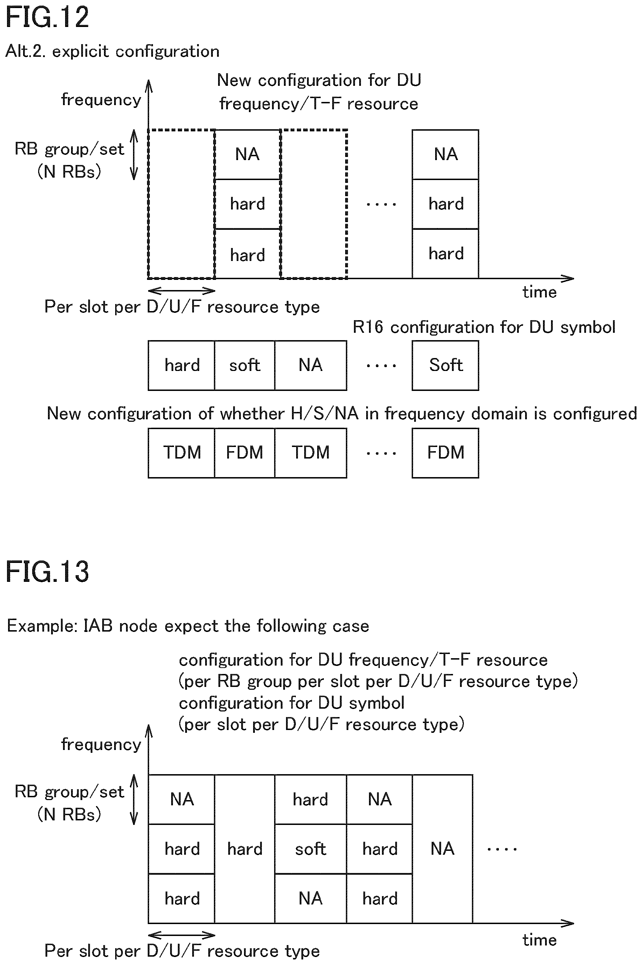

   Fig. 12 is a diagram showing an example (Alt.2) in which the time at which the DU frequency/T-F resource type (H/S/NA) is configured is determined by the new configuration.
[Fig. 13]
   Fig. 13 is a diagram showing another example.
[Fig. 14]

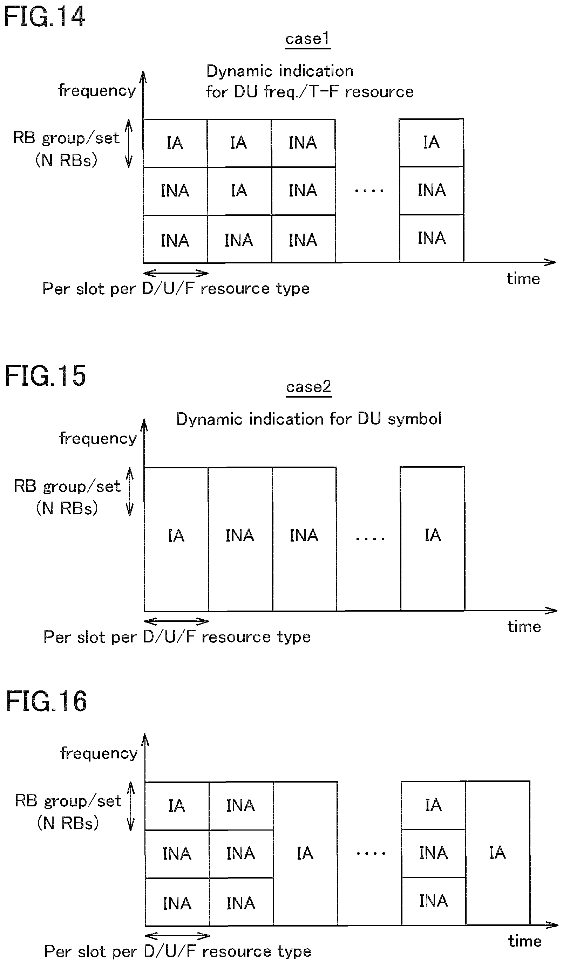

   Fig. 14 is a diagram showing an example (case 1) of dynamic indication of availability for RBG per slot D/U/F resource type.
[Fig. 15]
   Fig. 15 is a diagram showing an example (case 2) of dynamic indication of availability per slot D/U/F resource type.
[Fig. 16]
   Fig. 16 is a diagram showing an example where case 1 and case 2 coexist.
[Fig. 17]

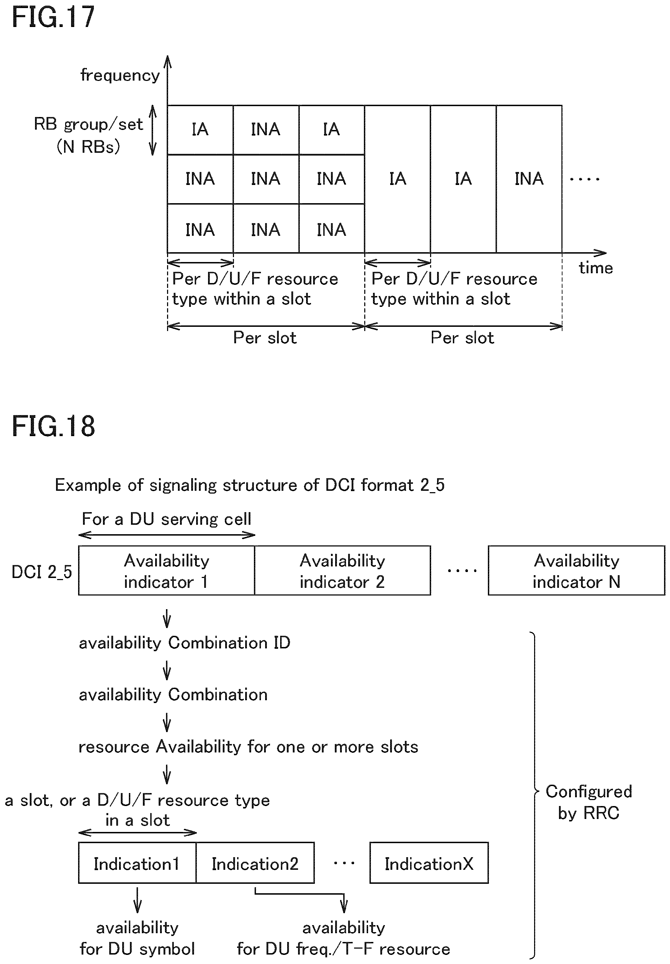

   Fig. 17 is a diagram showing an example in which the dynamic indication of the DU symbol and the dynamic indication of the DU frequency/T-F resource are shown for different slots.
[Fig. 18]
   Fig. 18 is a diagram showing an example of a signaling structure in DCI format 2_5.
[Fig. 19]

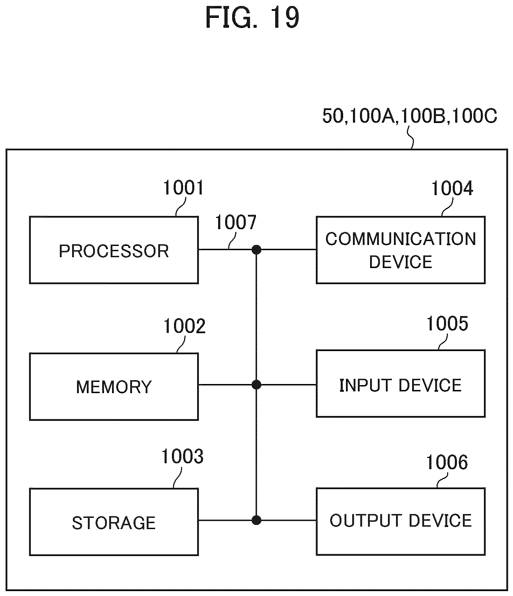

   Fig. 19 shows an example of the hardware configuration of a CU50, the radio communication nodes 100 A to 100 C, and the UE200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

Fig. 1 is an overall schematic configuration diagram of a radio communication system 10 according to the present embodiment. The radio communication system 10 is a radio communication system according to 5G New Radio(NR) and is composed of a plurality of radio communication nodes and terminals.

Specifically, the radio communication system 10 includes radio communication nodes 100 A, 100B, 100 C, and a user terminal 200 (UE200).

The radio communication nodes 100 A, 100B, 100 C can configure radio access with the UE200 and radio backhaul (BH) between the radio communication nodes. Specifically, a radio link backhaul (transmission path) is configured between the radio communication nodes 100 A and 100B, and between the radio communication nodes 100 A and 100 C.

This integrated configuration of radio access to the UE200 and radio backhaul between the radio communication nodes is called Integrated Access and Backhaul (IAB).

IAB reuses existing functions and interfaces defined for radio access. In particular, Mobile-Termination (MT), gNB-DU (Distributed Unit), gNB-CU (Central Unit), User Plane Function (UPF), Access and Mobility Management Function (AMF) and Session Management Function (SMF), and corresponding interfaces, such as NR Uu (between MT and gNB/DU), F1, NG, X2 and N4, may be used as baselines.

The radio communication node 100 A is connected to the NR radio access network (NG-RAN) and the core network (Next Generation Core (NGC) or 5 GC) via a wired transmission line such as a fiber transport. The NG-RAN/NGC includes a communication node, a Central Unit 50 (CU50). The NG-RAN and NGC may be referred to simply as a network.

The CU50 may be configured by any or a combination of the above UPF, AMF, and SMF. Alternatively, the CU50 may be a gNB-CU as described above.

Fig. 2 is a diagram showing a basic configuration example of an IAB. As shown in Fig. 2, in this embodiment, the radio communication node 100 A constitutes a parent node in the IAB, and the radio communication node 100B (and the radio communication node 100 C) constitutes an IAB node in the IAB.

The parent node may be called an upper node in relation to the IAB node. Furthermore, the parent node may be called an IAB donor. The IAB node may also be called a subordinate node in relation to the parent node.

The child node in the IAB is composed of other radio communication nodes not shown in Fig. 1. Alternatively, the UE200 may constitute a child node. The IAB node may be referred to as a higher node in relation to the child node, and the child node may be referred to as a lower node in relation to the IAB node.

A radio link is configured between the parent node and the IAB node. Specifically, a radio link called Link_parent is set.

A radio link is configured between the IAB node and the child node. Specifically, a radio link called Link_child is set.

The radio link configured between such radio communication nodes may be called a radio backhaul link. The link_parent is composed of a DL Parent BH in the down direction and a UL Parent BH in the up direction. The link _child is composed of a DL Child BH in the down direction and a UL Child BH in the up direction.

The radio link configured between the UE200 and the IAB node or the parent node is called a radio access link. Specifically, the radio link is composed of DL access in the down direction and UL access in the up direction.

The IAB node has a Mobile Termination(MT) which is a function for connecting with the parent node and a Distributed Unit(DU) which is a function for connecting with the child node (or UE200). Although not shown in Fig. 2, the parent node and the child node also have a MT and a DU.

In terms of the DU, downlink (DL), uplink (UL), and flexible time-resource(D/U/F) are classified into one of Hard, Soft, or Not Available(H/S/NA) types. Also in Soft(S), available or not available is specified.

Flexible time-resource(F) is a time resource available for either DL or UL. "Hard" is a radio resource always available for the DU child link to which the corresponding time resource is connected with the child node or UE, and "Soft" is a radio resource (DU resource) whose availability for the DU child link of the corresponding time resource is explicitly or implicitly controlled by the parent node.

In addition, in the case of Soft(S), the radio resource to be notified can be determined based on whether IA(indicated as available) or INA(indicated as not available).

"IA" means that the DU resource is explicitly or implicitly indicated as available. "INA" also means that the DU resource is explicitly or implicitly indicated as unavailable.

Although the example IAB configuration shown in Fig. 2 utilizes the CU/DU division, the IAB configuration is not necessarily limited to such a configuration. For example, the IAB may be configured for the radio backhaul by tunneling using GPRS Tunneling Protocol (GTP) -U/User Datagram Protocol (UDP)/Internet Protocol (IP).

The main advantage of such an IAB is the flexibility and high density of NR cells without densifying the transport network. The IAB can be applied to various scenarios, such as small cell placement outdoors, indoor, and even mobile relay (For example, on buses and trains) support.

The IAB may also support a standalone (SA) deployment of NR only or a non-standalone (NSA) deployment including other RATs (such as LTE), as shown in Figs. 1 and 2.

In this embodiment, the radio access and radio backhaul may be half-duplex or full-duplex. Further, time division multiplexing (TDM), space division multiplexing (SDM) and frequency division multiplexing (FDM) are available for the multiplexing method.

When the IAB node operates with half-duplex communication, DL Parent BH becomes the receiving (RX) side, UL Parent BH becomes the transmitting (TX) side, DL Child BH becomes the transmitting (TX) side, and UL Child BH becomes the receiving (RX) side. In the case of Time Division Duplex (TDD), the configuration pattern of DL/UL in the IAB node is not limited to DL-F-UL only, and configuration patterns such as radio backhaul (BH) only and UL-F-DL may be applied.

In this embodiment, in particular, a case where simultaneous operation of DU and MT of the IAB node is realized by using TDM/FDM will be described. It should be noted that both TDM and FDM are not always supported, and it is assumed that only one is supported.

### (2)Function block configuration of the radio communication system

Next, the function block configuration of the radio communication node 100 A and the radio communication node 100B constituting the radio communication system 10 will be described.

### (2.1) Radio communication node 100 A

Fig. 3 is a functional block diagram of the radio communication node 100 A constituting the parent node. As shown in Fig. 3, the radio communication node 100 A includes a radio transmission unit 110, a radio reception unit 120, a NW IF unit 130, an IAB node connection unit 140, and a control unit 150.

The radio transmission unit 110 transmits a radio signal according to the specifications of 5G to 6G. The radio reception unit 120 transmits a radio signal according to the specifications of 5G to 6G. In this embodiment, the radio transmission unit 110 and the radio reception unit 120 execute radio communication with the radio communication node 100B constituting the IAB node.

In this embodiment, the radio communication node 100 A has functions of MT and DU, and the radio transmission unit 110 and the radio reception unit 120 also transmit and receive radio signals corresponding to MT/DU.

The radio transmission unit 110 and the radio reception unit 120 can perform radio communication in accordance with half-duplex and full-duplex. The radio transmission unit 110 and the radio reception unit 120 can perform radio communication in accordance with FDM and SDM, not limited to TDM (TDD).

The NW IF unit 130 provides a communication interface for realizing connection with the NGC side, etc. For example, the NW IF unit 130 may include interfaces such as X2, Xn, N2, N3, etc.

The IAB node connection unit 140 provides an interface for realizing connection with an IAB node (or a child node including a UE). Specifically, the IAB node connection unit 140 provides a function of a distributed unit (DU). That is, the IAB node connection unit 140 is used for connection with the IAB node (or child node).

The IAB node may be described as a RAN node that supports radio access to the UE200 and backhauls access traffic by radio. The parent node, or IAB donor, may also be described as a RAN node that provides the interface of the UE to the core network and the radio backhaul function to the IAB node.

The control unit 150 performs control of each functional block that constitutes the radio communication node 100 A. In particular, in the present embodiment, the control unit 150 performs control on the configuration of the radio link between the IAB node (radio communication node 100B) and the.

Specifically, the control unit 150 can determine the DU resources (which may be referred to as radio resources) to be allocated to the radio link that is configured via the function of the DU for the IAB node.

The resources may include time resources in the time direction and frequency resources in the frequency direction.

The time resources are resources in the time direction and may be in units of symbols, slots or subframes. The time direction may also be called a time domain, a symbol period or a symbol time. The symbol may also be called an Orthogonal Frequency Division Multiplexing (OFDM) symbol.

The frequency resource is a resource in the frequency direction, and the unit may be a resource block, a resource block group, a subcarrier, or the like. The frequency direction may also be referred to as a frequency domain, a resource block, a resource block group, a subcarrier, or a Bandwidth part (BWP).

### (2.2) Radio communication node 100B

Fig. 4 is a functional block diagram of the radio communication node 100B constituting the IAB node. As shown in Fig. 4, the radio communication node 100B includes a radio transmission unit 161, a radio reception unit 162, an upper node connection unit 170, a lower node connection unit 180, and a control unit 190.

As described above, the radio communication node 100B includes a function block similar to the radio communication node 100 A (parent node) described above, but differs in that it includes an upper node connection unit 170 and a lower node connection unit 180, and in the function of the control unit 190.

The radio transmission unit 161 transmits a radio signal according to the specifications of 5G to 6G. The radio reception unit 162 transmits a radio signal according to the specifications of 5G to 6G. In this embodiment, the radio transmission unit 161 and the radio reception unit 162 perform radio communication with the radio communication node 100 A constituting the parent node and radio communication with the child node (including the case of the UE 200).

Similar to the radio communication node 100 A (the parent node), the radio transmission unit 161 and the radio reception unit 162 can perform radio communication in accordance with half-duplex and full-duplex, and in addition, radio communication in accordance with FDM and SDM, not limited to TDM (TDD).

In this embodiment, the radio reception unit 162 can receive resource information from the network indicating the type of resources allocated to the radio link with the other radio communication nodes constituting the child node in relation to the subordinate node, specifically, the UE200, or the IAB node. In this embodiment, the radio reception unit 162 constitutes reception unit.

Specifically, the radio reception unit 162 can receive resource information indicating the type of DU resource (Example: H/S/NA, IA/INA) allocated to the radio link, which is configured via the function of the DU for the lower node. The resource information may be transmitted from the CU50 according to the F1-AP(Application) protocol applied to the F1 interface between the CU and the DU, or it may be transmitted from the network (Specifically, gNB) by signaling of the radio resource control layer (RRC).

The resource information received by the radio reception unit 162 may indicate the type of time resource (H/S(IA/INA)/NA) and/or the type of frequency resource (H/S(IA/INA)/NA).

Specifically, the resource information may indicate the resource type (Hard, Soft(IA/INA) or NA) for each unit (For example, symbols) in the time direction and the resource type (Hard, Soft(IA/INA) or NA) for each unit (For example, subcarriers) in the frequency direction. It should be noted that the resource information indicating at least the type of the time resource and the resource information indicating at least the type of the frequency resource may be specified (received) in a plurality of times.

As described above, the unit in the time direction is not limited to a symbol, but may also be a slot constituted by a plurality of symbols (For example, 14 symbols).

The resource information may indicate a frequency resource with reference to a resource block (RB) or a resource block group (RGB). One RB may be interpreted as a 12 resource element (RE) in the frequency domain, and one RE may be interpreted as the smallest unit of a resource grid composed of one subcarrier in the frequency domain (one OFDM symbol in the time domain).

Further, the resource information may indicate the type of the time resource and the type of the frequency resource separately, or may indicate a combination of the type of the time resource and the type of the frequency resource, as described later.

Alternatively, the resource information may indicate the type of the resource for each combination of the position in the time direction and the position in the frequency direction. For example, the resource information may indicate the type of the resource (Hard, Soft, NA and/or IA/INA) for each combination of a symbol position (which may be specified by a symbol number) and a subcarrier position (which may be specified by a subcarrier number or RB/RBG Index), i.e., a combination (which may be expressed as a set) of a time resource and a frequency resource.

Even if the type of the resource is indicated for each combination (set) of the time resource and the frequency resource, the resource information may indicate the type of the resource (Hard, Soft or NA) for each combination of the time resource and the frequency resource defined by the unit (For example, symbols) in the time direction and the unit (For example, subcarriers) in the frequency direction.

Further, the resource information may collectively indicate a plurality of resources of the same type that are continuous in the time direction or the frequency direction (at least either of them may be used).

For example, the resource information may indicate the slot number started by a resource of the same type (For example, Hard) in the time direction and the number of slots in which the resources of the same type are continuous (For example, two slots).

In this embodiment, a case where TDM and FDM are mixed will be described. Therefore, the type of frequency resource at all times is not necessarily indicated in the resource information. In other words, the resource information indicates the type of frequency resource in the frequency direction only for at least some of the time resources. Alternatively, the resource information indicates the type of resource for each combination of the position in the time direction and the position in the frequency direction only for at least some of the time resources. As described above, the type of the time resource may be indicated in the resource information indicating the type of the frequency resource, and the type of the time resource may be indicated in other resource information. Furthermore, some time resources indicating the type of the frequency resource may not be notified (received) from the network, but may be specified by specifications, etc. Specific examples of the resource information will be described later.

The upper node connection unit 170 provides an interface for realizing connection with a node higher than the IAB node. The upper node refers to a radio communication node located on the network, more specifically, on the core network side (which may be called the upstream side or the upstream side) than the IAB node.

Specifically, the upper node connection unit 170 provides the function of Mobile Termination(MT). That is, in this embodiment, the upper node connection unit 170 is used for connection with the parent node constituting the upper node.

The lower node connection unit 180 provides an interface for realizing connection with a node lower than the IAB node. The lower node means a radio communication node located on the end user side (may be called the downstream side or the downstream side) than the IAB node.

Specifically, the lower node connection unit 180 provides the function of a distributed unit (DU). That is, in this embodiment, the lower node connection unit 180 is used for connection with a child node (which may be the UE 200) constituting the lower node.

The control unit 190 executes control of each function block constituting the radio communication node 100B. In particular, in this embodiment, the control unit 190 configures the radio link based on the resource information received from the network (which may include the CU 50).

Specifically, based on the type of time resource (H/S/NA, IA/INA) indicated by the resource information and the type of frequency resource (H/S/NA, IA/INA), control unit 190 can determine the resource (DU resource) allocated to the radio link with the other radio communication nodes constituting the child node in relation to the lower node, specifically, the UE200, or the IAB node.

Various channels may be transmitted and received via the radio link to which the DU resource is allocated.

The channels include a control channel and a data channel. The control channels include PDCCH(Physical Downlink Control Channel), PUCCH(Physical Uplink Control Channel), PRACH(Physical Random Access Channel), PBCH(Physical Broadcast Channel), and the like.

Data channels include PDSCH(Physical Downlink Shared Channel) and PUSCH(Physical Uplink Shared Channel).

Reference signals include Demodulation Reference Signal (DMRS), Sounding Reference Signal (SRS), Phase Tracking Reference Signal (PTRS), and Channel State Information-Reference Signal(CSI-RS), and signals include channels and reference signals. Data may mean data transmitted via a data channel.

Uplink Control Information (UCI) is control information of UL and symmetric control information of Downlink Control Information (DCI). UCI is transmitted through PUCCH or PUSCH. UCI may include SR (Scheduling Request), HARQ (Hybrid Automatic repeat request) ACK/NACK, and CQI (Channel Quality Indicator).

DCI is control information of DL. DCI is transmitted through PDCCH. DCI may include schedule information for PDSCH and PUSCH.

### (3)Operation of radio communication system

Next, the operation of the radio communication system 10 will be described. Specifically, the operation of IAB node (radio communication node 100B) related to simultaneous transmission and reception using TDM/FDM between radio link (Link _parent) with parent node (radio communication node 100 A) and radio link (Link _child) with child node (UE200, or other radio communication nodes that make up the child node) will be described.

### (3.1) Assumption

Release 16 of 3GPP specifies resource multiplexing by TDM between parent and child links.

DU resources for TDM can be configured as semi-static (Semi-static) and/or dynamic. In each serving cell formed by the IAB node DU, the IAB node DU can configure the resource type (type) of Hard, Soft(IA/INA) or NA for the symbols in each slot.

This configuration can be realized using GNB-DU RESOURCE CONFIGURATION, which is an F1-AP message transmitted from the CU50.

When the DU resource (symbol) is Soft, dynamic indication (dynamic indication: IA or INA) can be performed explicitly and implicitly.

Specifically, when the DL, UL or Flexible symbol is configured as Soft, the IAB node DU can either transmit or receive, or transmit or receive, within the symbol only if:
▪ TAB node MT does not transmit or receive on the symbol (implicit indication)
▪ TAB node MT transmits or receives on the symbol, so that the use of the symbol by IAB node DU does not alter the transmission or reception on the symbol (implicit indication)
▪ TAB node MT detects DCI format 2_5 (see 3GPP TS38.212 7.3) and indicates that the symbol is available by the field value in the Availability Indicator(AI) index (explicit indication)

With regard to DU resources in the frequency domain, CU50 can configure information on the frequency of the serving cell (DU serving cell) formed by the DU and the transmission bandwidth via F1-AP signaling using the information element (IE) of the served cell information. The served cell information can include the IE of the NR Frequency Info and the transmission bandwidth.

Table 1 shows an example of a transmission bandwidth configuration as defined in Section 9.3.1.15 of 3GPP TS38.473.

**[Table 1]**

| **lE/Group Name** | **Presence** | **Range** | **IE Type and Reference** | **Semantics Description** |
|---|---|---|---|---|
| NR SCS | M | | ENUMERATED (scs15, scs30, scs60, scs120, ...) | The values scs15, scs30, scs60 and scs120 corresponds to the sub carrier spacing in TS 38.104 [17]. |
| NRB | M | | ENUMERATED (nrbll, nrb18, nrb24, nrb25, nrb31, nrb32, nrb38, nrb51, nrb52, nrb65, nrb66, nrb78, nrb79, nrb93, nrb106, nrb107, nrb121, nrb132, nrb133, nrb135, nrb160, nrb162, nrb189, nrb216, nrb217, nrb245, nrb264, nrb270, nrb273, ...) | This IE is used to indicate the UL or DL transmission bandwidth expressed in units of resource blocks "N_{RB}" (TS 38.104 [17]). The values nrb11, nrb18, etc. correspond to the number of resource blocks "N_{RB}" 11, 18, etc. |

Transmission Bandwidth is used to indicate the UL or DL transmission bandwidth.

Table 2 shows an example configuration of NR Frequency Info as defined in Section 9.3.1.17 of 3GPP TS38.473.

**[Table 2]**

| **IE/Group Name** | **Presence** | **Range** | **IE Type and Reference** | **Semantics Description** |
|---|---|---|---|---|
| NR ARFCN | M | | INTEGER (0.. maxNRARFCN) | RF Reference Frequency as defined in TS 38.104 [17] section 5.4.2.1. The frequency provided in this IE identifies the absolute frequency position of the reference resource block (Common RB 0) of the carrier. Its lowest subcarrier is also known as Point A. |
| SUL Information | O | | 9.3.1.28 | |
| ..... | | *1* | | |

NR Frequency Info can define the carrier frequency used in a cell for a specific direction (UL or DL) in the FDD, for both directions in the TDD, or for Supplementary Uplink (SUL) carriers.

In Release 16 of the 3GPP, the donor CU and the parent node can recognize the multiplexing capability (TDM required or not) for any pair of MT component carriers (CCs) or DU cells between the MT and DU of the IAB node.

In addition, an indication of the multiplexing capability in the case where the MT and DU of the IAB node are non-TDM is additionally provided for a combination of transmission and reception directions (for each pair of MT CCs or DU cells), as shown below.
▪MT Transmission/DU Transmission
▪MT Transmission/DU Reception
▪MT Reception/DU Transmission
▪MT Reception/DU Reception

Regarding simultaneous transmission and reception between a parent link and a child link by resource multiplexing by FDM, the following assumption (Assumption)1~3 is considered.

Figs. 5A, 5B and 5C show an example of the use of the frequency resources of the DU serving cell and the MT serving cell in accordance with assumption 1-3.
▪(Assumption 1): The DU serving cell and the MT serving cell simultaneously transmit and receive (which may mean simultaneous transmission or reception) using nonoverlapping resources in the frequency direction.

As shown in Fig. 5A, the DU transmission band does not overlap with the BWP (which may be configured by signaling in the RRC layer) of the MT serving cell.

The DU serving cell and the MT serving cell may mean the cells formed by the DU and the MT of the IAB node, respectively.
▪(Assumption 2): The DU serving cell and the MT serving cell transmit and receive simultaneously using resources that completely overlap in the frequency direction.
▪(Assumption 3): The DU serving cell and the MT serving cell transmit and receive simultaneously using partially overlapping resources in the frequency direction.

In the case of (Assumption 1), since the bandwidth between the DU serving cell and the MT serving cell is configured so as not to overlap, if the multiplexing capability of the IAB node supports simultaneous transmission and reception of the pair of the DU serving cell and the MT serving cell, the MT and DU of the IAB node can execute simultaneous transmission and reception if the transmission direction is consistent with the multiplexing capability. In this case, no additional signaling for resource multiplexing in the frequency domain is required.

In the case of (Assumption 2) or (Assumption 3), even if the IAB node has the ability to support simultaneous transmission and reception of a pair of DU serving cells and MT serving cells, the MT and DU of the IAB node can perform simultaneous transmission and reception only if the parent node and the IAB node have a common understanding that orthogonal frequency resources are used by the MT and DU.

Based on the provisions of Release 16 of the 3GPP, in this embodiment, semi-static or dynamic resource multiplexing between the parent link and the child link by FDM is realized. In this embodiment, assuming that FDM is not always performed at all times, even in such a case, a method for executing appropriate simultaneous transmission and reception will be described in particular.

### (3.2) Operation overview

In the following, while semi-static resource multiplexing by FDM is described, dynamic resource multiplexing is also described. The operation described below is not limited to (Assumption 2) or (Assumption 3), but may also be applied to (Assumption 1).

The operation described below enables simultaneous transmission and reception according to FDM by the MT and DU of the IAB node in the same frequency band (which may simply be referred to as a band or frequency range), that is, frequency division multiplexing (FDD).

The following two options may be configured to support FDD operation by the MT and DU of the IAB node. The following options are related to semi-static configuration, but dynamic instructions may be provided as well (details will be described later).
▪(Option 1): For each frequency axis/time axis (for each unit in the frequency direction/time direction), the DU resource availability (H/S/NA) of the IAB node is configured to semi-static.
▪(Option 2): For each matrix (combination) of the frequency/time axis (for units in the frequency direction/time direction), the DU resource availability (H/S/NA) of the IAB node is configured to semi-static.
▪(Example 1a): In the example of operation related to Option 1 (Option 1a), the H/S/NA in the frequency direction is configured for each time resource (the configuration of H/S/NA in the time direction of 3GPP Release 16 is not required).

In Option 1a, each frequency resource (RB group/set) can be configured as the H/S/NA of each slot of each D/U/F resource type (this is the same unit granularity as the H/S/NA of Rel -16).

For each DU serving cell, each frequency resource may be configured to Hard, Soft or NA for each time unit.

As in operation example 1, the H/S/NA configuration for the DU symbol in Rel-16 is reused.

The IAB node may determine whether the DU of the IAB node can use the T-F resource from both the H/S/NA configuration for the DU symbol according to Rel-16 and the H/S/NA configuration for the frequency resource in option 1.

Here, option 1 differs from option 1 in that different resource types (H/S/NA) can be configured for the frequency resource if the time unit (For example, symbols) is different (see the circled portion in the figure). On the other hand, the H/S/NA configuration of the frequency resource for each time unit is the same as in operation example 1. Here, the availability of the transmission/reception of the DU resource is determined according to the H/S/NA configuration in the time direction and the frequency direction as in Fig. 7A.

The time unit may be any of multi-subframe, subframe, multi-slot, slot, symbol, symbol group, or D/U/F in each slot.

The granularity may be defined in advance as a specification of the 3GPP or may be configured by the network. Similarly, the periodicity in the time domain may be defined in advance as a specification of the 3GPP or may be configured by the network. The configured resource type may be repeated by the period.
▪(Example 2): Example of operation related to option 2
   ▪(Option 2-1): Set the resources configured as H/S/NA together
   ▪(Option 2-1-1): Set for each frequency axis/time axis
   ▪(Option 2-1-2): Set for each H/S/NA by bitmap for the resource indicated by the frequency axis/time axis matrix
▪(Example 2-2): Set the H/S/NA of each resource in the order of frequency, time or time, and frequency

The size of the RBG may be predetermined by the specification of the 3GPP or configured by signaling such as RRC. In addition, the default value (H/S/NA) may be configured for the configuration of the default resource type, for example, for each RB/RBG. In addition, only two resource types (H/S/NA) may be configured (H/S), for example.

### (3.3) Operation example

First, the overall sequence of configuration the DU resource of the IAB node will be described. Fig. 6 shows a schematic communication sequence of configuration the DU resource of the IAB node.

As shown in Fig. 6, the CU50 transmits resource information (e.g., GNB-DU RESOURCE CONFIGURATION) including the type (type) of the DU resource of the IAB node to the radio communication node 100B(IAB node) (S10). The GNB-DU RESOURCE CONFIGURATION is a type of F1-AP message and is specified in the 3GPP TS38.473.

Upon receiving the GNB-DU RESOURCE CONFIGURATION, the radio communication node 100B, specifically the DU of the IAB node, returns the GNB-DU RESOURCE
CONFIGURATIONACKNOWLEDGE to the CU50 (S20). GNB-DU RESOURCE CONFIGURATION and GNB-DU RESOURCE CONFIGURATION ACKNOWLEDGE are a type of F1-AP message and are specified in 3GPP TS38.473.

The radio communication node 100B configures the DU resource based on the type (H/S/NA) of the DU resource included in the resource information (GNB-DU RESOURCE CONFIGURATION) (S30).

Specifically, the radio communication node 100B determines the time resource and (at least a part of) the frequency resource allocated to the child link (Link _child) based on the type (H/S/NA) of the DU resource. The child link may be referred to as a DU serving cell as described above.

The radio communication node 100 A (parent node) and the radio communication node 100B configures the parent link (Link_parent) and the child link (Link _child) (S40). As described above, in this operation example, transmission and reception according to TDM/FDM (including the case where only a part of the transmission is performed) is executed between the parent link and the child link.

Fig. 7A shows an example of configuring a DU resource according to Option 1. Fig. 7B shows an example of configuring a DU resource according to Option 2.

As described above, in Option 1, H/S/NA of the frequency resource can be configured for each DU serving cell, but in Option 1, the configuration method of the DU symbol (time resource) in 3GPP Release 16 (Rel-16) may be reused. Whether the DU can use the time/frequency (T-F) resource must be determined from both the H/S/NA configuration of the DU symbol (In other words, time resources) in Rel-16 and the H/S/NA configuration of the frequency resource in Option 1.

As shown in Fig. 7A, the time direction is determined according to the H/S/NA configuration of Rel-16, and the frequency direction is determined according to the H/S/NA configuration in Option 1 for each type of DU resource (Hard, Soft or NA).

That is, when both the time direction and the frequency direction are configured to Hard(H), the DU resource can be used for transmission or reception, and when either the time direction or the frequency direction is configured to NA, the DDU resource cannot be used for transmission or reception. In other cases (If either or both of the time and frequency directions are configured to Soft(S)), the parent node notifies whether the DU resource can be used for transmission or reception by using DCI format 2_5.

As described above, in option 2, the T-F resource can be configured as Hard, Soft or NA for each DU serving cell. In option 2, no separate configuration of H/S/NA is required for the DU symbol of Rel-16. Whether the DU can use T-F resources can be determined directly according to the configuration in option 2.

### (3.3.1) Example 1

Option 1 may be further configured with the following sub-options:
▪(Option 1-1): Indicates a set of frequency resources and the resource type of the set of frequency resources.
▪(Option 1-2): Indicates a sequence of resource types, where each resource type corresponds to each frequency resource in the DU transmit band.

The granularity of the frequency resource may be RB or RBG(RB/RBG).

The display of the DU resource may be for the DU transmission band. In this example, resource block (RB)#1, 6, 10 is configured to Hard, RB#5, 7 is configured to Soft, and RB#4, 8, 9 is configured to NA.

In the case of option 1-1, the number of the RB included in each set of frequency resources (#1~3) and the resource type (H/S/NA) are indicated.

For option 1-2, the sequence of resource types (H/S/NA) along the RB order (Index) (H, S, NA, NA, S, H, S, NA, NA, H) is indicated.

### (3.3.2) Example 2

In this example, the IAB node assumes that both the time direction and the frequency direction (or the time-frequency direction) are configured with respect to the H/S/NA configuration of the IAB-DU. Fig. 8 is a diagram showing the assumed case 1. Fig. 9 is a diagram showing the assumed case 2.

The IAB node assumes the configuration of Rel-16 of H/S/NA for DU symbols for each slot/DUF(Downlink/Uplink/Free) resource type at the slot/symbol level (see Fig. 9, case 2). Alternatively, the IAB node assumes the new configuration of H/S/NA for DU frequency (freq.)/T-F resources for each slot/DUF resource type at the slot/symbol level (see Fig. 8, case 1). Here, the configuration of Rel-16 of H/S/NA for the DU symbol may mean H/S/NA for each D/U/F resource type. The configuration of H/S/NA for the DU frequency (freq.)/T-F resource may mean H/S/NA for each RBG for each slot of the D/U/F resource type, H/S/NA for each RBG for each slot, or H/S/NA for each RBG for each symbol (H/S/NA per RB group (N RBs) per slot per D/U/F resource type, or per RBG per slot or per RBG per symbol). The type of the frequency/T-F resource may also mean a resource type (H/S/NA) for a portion of time in the frequency direction, or a resource type (H/S/NA) for a portion of time in the combination of the position of time (T) and the position of frequency (F) (T-F) .

Whether the resource type "H/S/NA" is configured for the DU symbol or the DU frequency/T-F can be distinguished by a higher layer parameter (e.g., "FDM operation"). For example, if "FDM operation" is enabled, the IAB node assumes a new configuration of H/S/NA for the DU frequency/T-F resource. On the other hand, if "FDM operation" is not enabled, the IAB node assumes an R16 configuration of H/S/NA for the DU symbol.

In this embodiment, in particular, assuming a case where FDM and TDM are mixed, the operation in the case where the cases 1 and 2 described above are mixed will be described. Fig. 10 is a diagram showing the cases 1 and 2.

As shown in Fig. 10, the IAB node assumes both a Rel-16 configuration of H/S/NA for DU symbols and a new configuration of H/S/NA for DU frequency/T-F resources for each slot/symbol.

### (3.3.3) Example 3

In this example, the IAB node assumes a Rel-16 configuration of H/S/NA for DU symbols for each slot/symbol. The IAB node also assumes a new configuration of H/S/NA for DU frequency/T-F resources of some slot/DUF resource types at the slot/symbol level.

Fig. 11 shows an example (Alt.1) in which DU frequency/T-F resource types (H/S/NA) are configured only when soft symbols are set.

As shown in Fig. 11, in this example (Alt.1), for each slot, it is determined (implicitly) by predefined rules whether DU frequency/T-F resource types (H/S/NA) are configured for each D/U/F resource type in each slot, or for each symbol. For example, as shown in Fig. 11, it may be a specification (prescribed/predefined) in which the H/S/NA resource type is configured in the frequency direction only for the DU symbol designated as soft in the configuration of Release 16. In this example, the DU frequency/T-F resource type (H/S/NA) is configured only in the case of a specific resource type (H/S/NA) with a DU symbol (For example, only DU soft symbols or only DU hard/soft symbols).

Fig. 12 shows an example (Alt.2) in which the time at which the DU frequency/T-F resource type (H/S/NA) is configured is determined by the new configuration.

As shown in Fig. 12, in this example (Alt.2), for each slot, it is explicitly configured whether the DU frequency/T-F resource type (H/S/NA) is configured for each D/U/F resource type in each slot or for each symbol.

For example, as shown in the figure below in Fig. 12, for each slot, 1 bit is configured for each D/U/F resource type in each slot or for each symbol, and if "0 " (" FDM ") is set, the UE may assume that the H/S/NA configuration for the DU frequency/T-F resource is set. On the other hand, if "1 " (" TDM ") is set, the UE does not assume the H/S/NA configuration for the DU frequency/T-F resource. As another example, "0 " and" 1 " may be replaced.

As described above, it may be assumed that the IAB node is configured in the time direction for all time resources and in the frequency direction (or time-frequency direction) for some time resources. Furthermore, as described above, the following variants Alt.1,2 may be implemented.
Alt.1: Specify the time resource to be configured in the frequency direction (or time-frequency direction)
Alt.2: Notify the time resource to be configured in the frequency direction (or time-frequency direction)

As another example, the IAB node may assume new configuration signaling. Fig. 13 is a diagram illustrating another example. In the new configuration signaling, at the slot level, the H/S/NA of some slots/DUF resource types/symbols are configured for DU frequency/T-F resources, and at the slot level, the H/S/NA of other slots/DUF resource types/symbols are configured for DU symbols.

As described above, whether the resource type (H/S/NA) is configured for each symbol or the resource type (H/S/NA) is configured for the DU frequency/T-F resource may be determined by predefined rules, may be explicitly configured for each slot, or (implicitly) may be determined from the resource type (D/U/F) for each slot or symbol.

### (3.4) Example of operation related to dynamic indication

In the above option, an example of semi-static configuration of the resource type has been described, but it is not limited to this, and dynamic indication may be performed. For example, the configuration of semi-static resource type "H/S/NA " described above may be replaced with the dynamic indication" IA/INA ".

Fig. 14 is a diagram showing an example of the dynamic indication for the DU frequency/T-F resource. As shown in Fig. 14, the availability of the soft resource in the IAB FDM may be dynamically indicated (IA/INA) in the framework of DCI format 2_5. The following two options may be adopted.
Proposition 1-2: Reuse DCI format 2_5, which indicates the availability of each soft frequency resource
Proposition 2-2: Reuse DCI format 2_5 to indicate the availability of each soft T-F (time-frequency) resource

In this working example, the case where IAB assumes both of the above options will be described in particular. The IAB node assumes that Dynamic Indication is notified in the time direction for some time resources and in the frequency direction (or time-frequency direction) for other time resources. The following options may be adopted.
Alt. 1: Specify whether dynamic indication corresponds to time direction or frequency direction (or time-frequency direction)
Alt. 2: Notify whether dynamic indication corresponds to time direction or frequency direction (or time-frequency direction)

The IAB node expects dynamic indication (IA/INA) of availability of DU symbols for some slots/symbols, while it expects dynamic indication of availability of DU frequency/T-F resources for other slots/symbols.

Note that the IAB node may assume one DCI for each slot/symbol to dynamically indicate resource availability. Here, if the availability per DU frequency/T-F resource (IA/INA) per D/U/F resource type per slot is indicated, the indication of availability for the DU symbol becomes unnecessary. On the other hand, if the availability is indicated per DU symbol, the indication of availability for the DU frequency/T-F resource becomes unnecessary (For example, if a DU symbol is indicated as available (IA), all frequency/T-F resources for that symbol may be available.). In other words, the indication of availability for both the DU symbol and the DU frequency/T-F resource is not mandatory.

The dynamic display of availability for the DU symbol may mean the dynamic display of availability for each slot (IA/INA) for each D/U/F resource type. The dynamic indication for the DU frequency/T-F resource may mean the dynamic indication of availability (IA/INA) for each RB group (N RB), for each slot, for each D/U/F resource type, or for each per RBG per slot, or for each per RBG per symbol. Note that IA means that it is indicated as available. Also, INA means that it is not available or there is no indication.

Either the IAB node assumes a dynamic indication of DU symbol availability for each slot/symbol, or the IAB node assumes a dynamic indication of DU frequency/T-F resource availability for each slot/symbol.

For example, whether the IAB node assumes a dynamic indication of DU symbol availability or a dynamic indication of DU frequency/T-F(time-frequency) resource availability may be determined by a higher-layer parameter (e.g., "FDM "). When "FDM " is enabled, the IAB node assumes a dynamic indication of the availability of each frequency/T-F resource. On the other hand, when "FDM " is not enabled, the IAB node assumes a dynamic indication of the availability of each symbol.

Fig. 14 is a diagram showing an example (Case 1) of a dynamic indication of the availability of RBGs for each slot D/U/F resource type. Fig. 15 is a diagram showing an example (Case 2) of a dynamic indication of the availability for each slot D/U/F resource type. In this working example, the IAB node assumes that both of these cases can be mixed.

Fig. 16 is a diagram showing an example in which case 1 and case 2 coexist. As shown in Fig. 15, IAB nodes assume different D/U/F resource types. That is, IAB nodes may assume either dynamic instructions for DU symbols or dynamic instructions for DU frequency/T-F resources.

Thus, IAB nodes may assume dynamic instructions for DU symbol availability for some slots/some DUF resource types at the slot/symbol level. IAB nodes may also assume dynamic instructions for DU frequency/T-F resource availability for some other slots/some other DUF resource types at the slot/symbol level. The following options may be adopted.

The dynamic indication of the availability of the Alt.1 DU symbol or the dynamic indication of the availability of the DU frequency/T-F resource is determined by predefined rules for each slot, for each D/U/F resource type in each slot, or for each symbol. For example, it may be based on a semi-static configuration. That is, when H/S/NA is configured for the DU symbol, the availability of the DU symbol may be dynamically indicated, and when H/S/NA is configured for the DU frequency/T-F resource, the availability of the DU frequency/T-F resource may be dynamically indicated.

Alt.2 Whether the dynamic indication of the availability of the DU symbol or the dynamic indication of the availability of the DU frequency/T-F resource is explicitly configured for each slot, for each D/U/F resource type of each slot, or for each symbol. For example, if one bit is provided for each slot, for each D/U/F resource type of each slot, or for each symbol, and "0" ("FDM") is set, the UE may assume the dynamic indication of the availability of the DU frequency/T-F resource. On the other hand, if "1" ("TDM") is set, the UE may assume the dynamic indication of the availability of the DU symbol. In the above, "0" and "1" may be replaced.

In this way, the IAB node may assume that the Dynamic Indication is notified in the time direction for some time resources and in the frequency direction (or time-frequency direction) for other time resources, and may adopt the following options described above.
Alt.1: Specify whether the Dynamic Indication corresponds to the time direction or the frequency direction (or time-frequency direction)
Alt.2: Notify whether the Dynamic Indication corresponds to the time direction or the frequency direction (or time-frequency direction)

Thus, as shown in Fig. 17, the IAB node can assume either a dynamic indication of the DU symbol or a dynamic indication of the DU frequency/T-F resource for different slots. At the slot level, dynamic indications of all D/U/F resource types are given for the DU symbol, and dynamic indications of all D/U/F resource types are given for the DU frequency/T-F resource.

Fig. 18 is a diagram showing an example of a signaling structure in DCI format 2_5. As shown in Fig. 18, in the configuration of the Availability Indicator(AI) for the DU serving cell, an Indication indicating the availability of the DU symbol may be included, and an Indication indicating the availability of the DU frequency/T-F resource may be included.

As shown below, the Indication may use the availability indication (Mapping the resourceAvailability element to availability) for the DU symbol specified in Rel-16.

**[Table 3]**

| **Value** | **Indication** |
|---|---|
| 0 | No indication of availability for soft symbols |
| 1 | DL soft symbols are indicated available No indication of availability for UL and Flexible soft symbols |
| 2 | UL soft symbols are indicated available No indication of availability for DL and Flexible soft symbols |
| 3 | DL and UL soft symbols are indicated available No indication of availability for Flexible soft symbols |
| 4 | Flexible soft symbols are indicated available No indication of availability for DL and UL soft symbols |
| 5 | DL and Flexible soft symbols are indicated available No indication of availability for UL soft symbols |
| 6 | UL and Flexible soft symbols are indicated available No indication of availability for DL soft symbols |
| 7 | DL, UL, and Flexible soft symbols are indicated available |

Alternatively, for example, the availability indication (Mapping the resourceAvailability element to availability) for DU symbols may be specified in a new table, as shown below. This is useful when using different DUF resource types at the slot level, as IAB nodes can assume either dynamic indications for DU symbols or dynamic indications for DU frequency/T-F resources. In this case, each indication may be configured for each DUF resource type.

**[Table 4]**

| **Value** | **Indication** |
|---|---|
| 0 | Indicated as available |
| 1 | No indication |

### (3.5) Example of semi-static configuration and dynamic instructions

semi-static configuration and dynamic instructions described above may be implemented in any combination. For example, one of the following options may be employed:
▪Semi-static: H/S/NA in time, Dynamic: in time and frequency
▪Semi-static: in frequency, Dynamic: in time and frequency
▪Semi-static: in time and frequency, Dynamic: in time and frequency

Specifically, if the H/S/NA of the DU symbol is configured for a slot/symbol, a dynamic indication of the availability of the DU symbol and a dynamic indication of the availability of the DU frequency/T-F resource may be assumed.

If the H/S/NA of the DU frequency/T-F resource is configured for a slot/symbol, a dynamic indication of the availability of the DU symbol and a dynamic indication of the availability of the DU frequency/T-F resource may be assumed.

If both the H/S/NA of the DU symbol and the H/S/NA of the DU frequency/T-F resource are configured for a slot/symbol, a dynamic indication of the availability of the DU symbol and a dynamic indication of the availability of the DU frequency/T-F resource may be assumed.

The UE capability and/or the configuration of the higher layer may also be defined as described below. ▪Whether FDM between MT Tx/Rx and DU Tx/Rx is supported ▪Whether FDM between MT Tx/Rx and DU Tx/Rx in MT service cell/DU cell is supported

Also, the above may only apply if the corresponding UE capability is reported and/or configured by the corresponding higher layer signal.

### (4)Operational effects

According to the above-described embodiment, the following effects can be obtained. Specifically, the radio communication node 100B(IAB node) can receive resource information indicating the type of DU resource (H/S/NA, IA/INA) allocated to the radio link configured via the function of the DU for the lower node (UE200 or child node). The radio communication node 100B can configured the radio link (child link) based on the resource information. Further, the resource information is resource information indicating the type of the time resource in the time direction and the type of the frequency resource in the frequency direction for at least a part of the time resource, or resource information indicating the type of the resource for each combination of the position in the time direction and the position in the frequency direction for at least a part of the time resource.

Therefore, even when TDM and FDM are mixed, the IAB node can execute simultaneous transmission and reception in MT and DU using FDM. That is, the IAB node can determine whether the frequency resource can be applied to simultaneous transmission and reception in MT using DU resources, specifically, FDM, so that the IAB node can execute appropriate simultaneous transmission and reception in MT and DU using FDM even when TDM and FDM coexist.

In this embodiment, the radio communication node 100B can receive resource information indicating the type of the time resource in the time direction, resource information indicating the type of the frequency resource in the frequency direction, or resource information indicating the type of the resource for each combination of the position in the time direction and the position in the frequency direction.

Therefore, in this embodiment, the radio communication node 100B can flexibly and surely determine the type of the time resource and the type of the frequency resource by separately receiving the information of the new resource type in the frequency direction in addition to the 100 information of the resource type for each conventional DU symbol/slot.

In this embodiment, the radio communication node 100B can specify the type of the frequency resource in the frequency direction, and some time resources are specified or notified from the network.

Therefore, the radio communication node 100B can implicitly or explicitly determine, from other information or the like, whether the type of the frequency resource in the frequency direction is indicated for a part of the time.

### (5)Other Embodiments

Although the embodiments have been described above, they are not limited to the description of the embodiments, and it is obvious to those skilled in the art that various modifications and improvements can be made.

For example, although the names of the parent node, the IAB node, and the child node were used in the embodiments described above, the names may be different insofar as the configuration of the radio communication node in which the radio backhaul between the radio communication nodes such as gNB and the radio access to the terminal are integrated is adopted. For example, it may be simply called the first node, the second node, etc., or it may be called an upper node, a lower node, a relay node, an intermediate node, etc.

The radio communication node may be simply called a communication device or a communication node, or it may be read as a radio base station.

Although the terms downlink (DL) and uplink (UL) were used in the embodiments described above, they may be referred to by other terms. For example, they may be replaced or associated with terms such as forward ring, reverse link, access link, backhaul, etc. Alternatively, terms such as first link, second link, first direction, and second direction may be used.

Further, block configuration diagrams (Figs. 3 and 4) used in the description of the above-described embodiment show blocks of functional units. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that functions transmission is called a transmission unit (transmitting unit) or a transmitter. As described above, the method of realization of both is not particularly limited.

Furthermore, the CU50, the radio communication nodes 100 A to 100 C, and the UE200 (the device) described above may function as a computer for processing the radio communication method of the present disclosure. Fig. 19 is a diagram showing an example of a hardware configuration of the device. As shown in Fig. 19, the device may be configured as a computer device including a processor 1001, a memory 1002, a storage 1003, a communication device 1004, an input device 1005, an output device 1006 and a bus 1007.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see Figs. 3 and 4) is realized by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

Processor 1001, for example, operates an operating system to control the entire computer. Processor 1001 may be configured with a central processing unit (CPU) including an interface to peripheral devices, a controller, a computing device, a register, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), or the like. The memory 1002 may store a program (program code), a software module, or the like capable of executing a method according to an embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a highfrequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device, such as the processor 1001 and the memory 1002, is connected by a bus 1007 for communicating information. The bus 1007 may be configured using a single bus or a different bus for each device.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Information notification is not limited to the aspects/embodiments described in this disclosure and may be performed using other methods. For example, information notification may be performed by physical layer signaling (e.g., Downlink Control Information (DCI), Uplink Control Information (UCI), higher layer signaling (e.g., RRC signaling, Medium Access Control (MAC) signaling, Notification Information (Master Information Block (MIB), System Information Block (SIB)), other signals, or a combination thereof. RRC signaling may also be referred to as RRC messages, e.g., RRC Connection Setup messages, RRC Connection Reconfiguration messages, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc. of the embodiments/embodiments described in the present disclosure may be rearranged as long as there is no conflict. For example, the method described in the present disclosure presents the elements of the various steps using an exemplary sequence and is not limited to the particular sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from a higher layer (or lower layer) to a lower layer (or higher layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each of the embodiments/embodiments described in the present disclosure may be used alone, in combination, or alternatively with execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channels and symbols may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile may be a vehicle (For example, cars, planes, etc.), an unmanned mobile (For example, drones, self-driving cars,), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal, hereinafter the same). For example, each aspect/embodiment of the present disclosure may be applied to a configuration in which communication between a base station and a mobile station is replaced by communication between a plurality of mobile stations (For example, it may be called device-to-device (D2D), vehicle-to-everything (V2X), etc.). In this case, the mobile station may have the function of the base station. Further, words such as "up" and "down" may be replaced with words corresponding to communication between terminals (For example, "side"). For example, terms an uplink channel, a downlink channel, or the like may be read as a side channel.

Similarly, the mobile station in the present disclosure may be replaced with a base station. In this case, the base station may have the function of the mobile station.

A radio frame may be composed of one or more frames in the time domain. Each frame or frames in the time domain may be referred to as a subframe. A subframe may be further configured by one or more slots in the time domain. The subframe may be a fixed time length (For example, 1 ms) independent of numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. A PDSCH (or PUSCH) transmitted in time units greater than a minislot may be referred to as a PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframe and the TTI may be a subframe (1 ms) in the existing LTE, a period shorter than 1 ms (For example, 1-13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. The number of slots (number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (SubCarrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB relative to the common reference point of the carrier. PRB may be defined in BWP and numbered within that BWP.

BWP may include UL BWP (UL BWP) and DL BWP (DL BWP). One or a plurality of BWPs may be configured in one carrier for the UE.

At least one of the configured BWPs may be active, and the UE may not expect to send and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access." In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to an element using a designation such as "first," "second," and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include," "including," and variants thereof are intended to be inclusive in a manner similar to the term "comprising." Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgment" and "decision" may include regarding some action as "judgment" and "decision." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

- 10: radio communication system
- 50: CU
- 100A, 100B, 100C: radio communication node
- 110: radio transmission unit
- 120: radio reception unit
- 130: NW IF unit
- 140: IAB node connection Unit
- 150: control unit
- 161: radio transmission unit
- 162: radio reception unit
- 170: upper node connection unit
- 180: lower node connection unit
- 190: control unit
- UE: 200
- 1001: processor
- 1002: memory
- 1003: storage
- 1004: communication device
- 1005: input device
- 1006: output device
- 1007: bus

## Claims

1. A radio communication node comprising:
a reception unit that receives resource information from a network indicating a type of resource to be allocated to a radio link with a lower node; and
a control unit that configures the radio link based on the resource information, wherein
the reception unit receives:
the resource information indicating a type of a time resource in a time direction and a type of a frequency resource in a frequency direction for at least a part of a time resource; or
the resource information indicating a type of resource for each combination of a position in the time direction and a position in the frequency direction for at least a part of a time resource.

2. The radio communication node according to claim 1, wherein the reception unit receives:
the resource information indicating the type of time resource in the time direction; and
the resource information indicating the type of frequency resource in the frequency direction, or
the resource information indicating the type of resource for each combination of the position in the time direction and the position in the frequency direction.

3. The radio communication node of claim 1 or 2, wherein the part of time resource is defined or notified from the network.

4. A radio communication method comprising the steps of:
receiving resource information from a network indicating a type of resource to be allocated to a radio link with a lower node; and
configuring the radio link based on the resource information, wherein
in the receiving step:
the resource information indicating a type of a time resource in a time direction and a type of a frequency resource in a frequency direction for at least a part of a time resource; or
the resource information indicating a type of resource for each combination of a position in the time direction and a position in the frequency direction for at least a part of a time resource, is received.
